# EUROPÄISCHE PATENTSCHRIFT

(11) **EP 0 407 418 B1**
(45) Veröffentlichungstag und Bekanntmachung des Hinweises auf die Patenterteilung: **29.12.1993**
(21) Anmeldenummer: 89903728.7
(22) Anmeldetag: 07.03.1989
(51) Int. Cl.: A47J 43/26

(54) **NUSSKNACKER**
NUTCRACKER
CASSE-NOIX

(30) Priorität: 09.03.1988 DE 3807689
(43) Veröffentlichungstag der Anmeldung: 16.01.1991
(73) Patentinhaber: Abdi-Tabari, Mohammed, D-28357 Bremen (DE)
(72) Erfinder: Abdi-Tabari, Mohammed, D-28357 Bremen (DE)
(86) Internationale Anmeldenummer: EP8900231
(87) Internationale Veröffentlichungsnummer: WO8908421

(56) Entgegenhaltungen:
- DE-B- 1 299 808
- DE-C- 240 985
- FR-A- 975 797
- FR-A- 1 029 351
- US-A- 2 550 197
- US-A- 2 720 900

## Beschreibung

Die Erfindung betrifft einen Nußknacker gemäß dem Oberbegriff des Patentanspruches. Ein derartiger Nußknacker ist aus der US-A-2 720 900 bekannt.
Beim Knacken von Nüssen mit einem herkömmlichen, aus zwei an einem Drehpunkt verbundenen Hebeln bestehenden Nußknacker ist in der Regel ein großer Kraftaufwand erforderlich. Das dadurch hervorgerufene plötzliche Zerbrechen der Nußschale hat häufig zur Folge, daß der auf die Nuß ausgeübte Druck nicht rechtzeitig verringert werden kann, so daß nicht nur die Schale, sondern auch der Nußkern zerstört wird.
Dies trifft besonders für große Nüsse zu, da gerade hier die Hebel weit geöffnet werden müssen und so der auf die Nuß ausgeübte Druck besonders groß ist.
Ein weiterer Nachteil besteht darin, daS bei dem weiten Öffnen der Hebel zum Knacken einer großen Nuß die Spannweite einer Hand häufig nicht ausreicht, um die Hebel zu fassen und die notwendige Kraft auf sie auszuüben, und daß andererseits beim Knacken sehr kleiner Nüsse die Hebel eng aufeinander liegen, so daß der notwendige Druck auf die Nuß noch ausgeübt werden kann.
Der Erfindung liegt die Aufgabe zugrunde, einen Nußknacker zu konstruieren, der unter Beibehaltung der klassischen Form und ohne jegliches Lernerfordernis das Öffnen von Nüssen unterschiedlicher Größe auf bequeme Art und Weise und unter geringem Kraftaufwand ermöglicht.
Die Aufgabe wird gemäß der Erfindung durch die im Kennzeichen des Patentanspruches angegebenen Merkmale gelöst.
Der Abstand zwischen den Handhebeln ist unabhängig von der Nußgröße konstant, da die Brechbacke beweglich und mit einem Zahnkranz versehen ist und sich daher unabhängig von der Hebelbewegung öffnen und stufenlos an die eingelegte Nuß anlegen läßt. Durch das Doppelhebelprinzip ist der Druck auf die Nuß trotz minimalem Kraftaufwand um ein vielfaches höher als bei einem herkömmlichen Nußknacker und ausreichend, um auch sehr harte Nüsse, wie z.B. Paranüsse, mühelos zu knacken.

Dadurch wird das Knacken von Nüssen auch unzähligen Menschen mit schwachen Handgelenken bzw. Handgelenkserkrankungen ermöglicht. Gleichzeitig wird die unerwünschte Zertrümmerung des Nußkerns dadurch ausgeschlossen, daß durch Druck auf die Handhebel die bewegliche Brechbacke sich jeweils nur um eine Zahnteilung schließt und dadurch begrenzter Hub auf die Nuß ausgeübt wird.
Durch Loslassen der Hebel und erneutes Schließen kann der Druck auf die Nuß stufenweise, d.h. jeweils um einen Zahn, verstärkt werden, bis die Nußschale aufgebrochen ist, der Kern aber unbeschädigt bleibt. Da die Brechbacke stufenlos an die Nuß angelegt wird, ist dieser Vorgang in der Regel nach zwei- bis dreimaliger Hebelbewegung beendet.
Der Nußknacker ist wirtschaftlich zu produzieren, weil alle Teile im Druckspritzverfahren bzw. Stanzverfahren herstellbar sind.

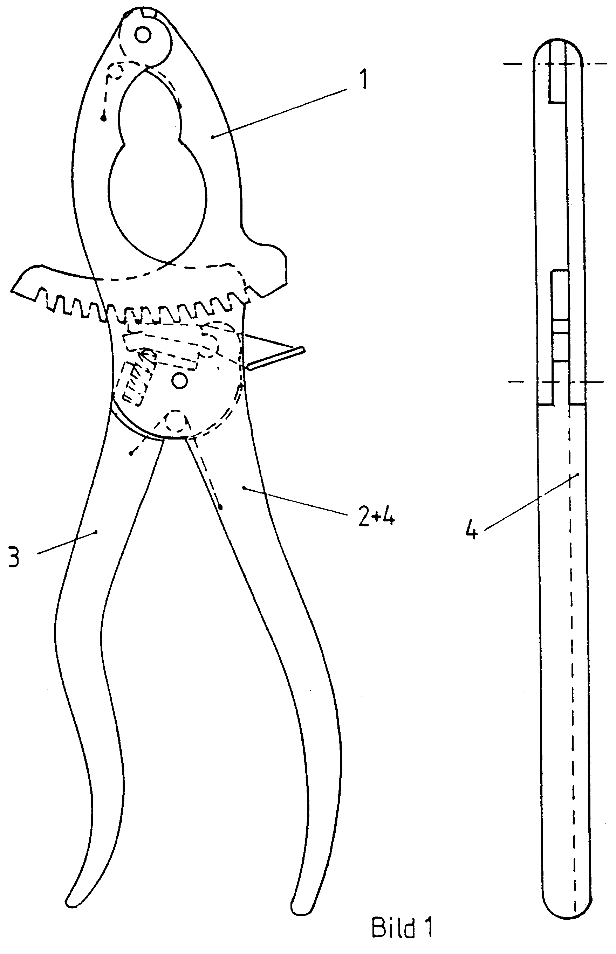

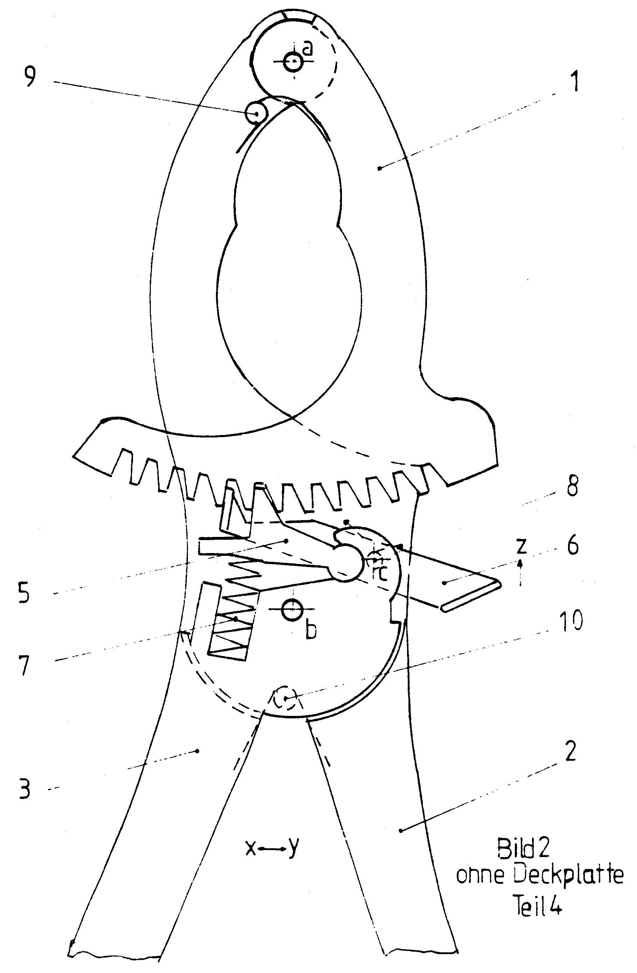

Die Erfindung wird nachfolgend an einem Ausführungsbeispiel näher erläutert, das in den Zeichnungen Bild 1 und Bild 2 dargestellt ist.
In Bild 1 wird der erfindungsgemäße Nußknacker in Seiten- und Vorderansicht dargestellt.
Bild 2 zeigt einen Nußknacker gemäß Bild 1 als Vergrößerung ohne Deckplatte.
Der in Bild 2 dargestellte Nußknacker besteht aus zwei Handhebeln 2 und 3, wobei Hebel 2 mit einer dazugehörigen Brechbacke fest verbunden ist, d.h., daß die beiden aus einem Stück bestehen, während der Hebel 3 beweglich um die Achse b auf dem Handhebel 2 befestigt ist. Die Brechbacke 1 ist zusammen mit der Brechbacke von Handhebel 2 an der Achse a drehbar befestigt und besitzt an ihrem unteren Ende eine Zahnleiste. Eine Feder 9, die auf der Brechbacke von Handhebel 2 befestigt ist, drückt die Brechbacke 1 in Richtung y. Im Hebel 3 ist zwischen Achse b und dem Zahnkranz eine Vorschubklinke 5 beweglich gelagert. Eine Feder 7 in Hebel 3 drückt die Vorschubklinke 5 in die anstehende Verzahnung. Im Handhebel 2 ist eine Rastenklinke 6, die an ihrem Ende nach oben abgewinkelt ist, drehbar befestigt. Eine Feder 8, die auch in der Achse c befestigt ist, drückt die Rastenklinke 6 ebenfalls in die Verzahnung. Wie Bild 1 zu entnehmen ist, deckt eine Deckelplatte 4, deren Form mit der Form von Handhebel 2 identisch ist, den Handhebel 2 sowie alle darauf befestigten Teile ab. Zum Öffnen und Einlegen einer Nuß wird die Rastenklinke 6 in Richtung z bewegt. Das nach oben abgewinkelte Klinkenende nimmt die einzahnige Vorschubklinke 5 mit und gibt die Zahnleiste von Brechbacke 1 frei. Die um Punkt a schwenkbare Brechbacke 1 kann nun mit der Hand an die Nuß angelegt werden. Zum Aufbrechen der Nußschale wird die Rastenklinke 6 losgelassen, die Feder 7 drückt die Vorschubklinke 5 in die anstehende Verzahnung. Die Vorschubklinke ist beweglich in Handhebel 3 gelagert. Wird der Handhebel 3, der sich um den Punkt b dreht, gegen den Hebel 2 in Richtung y gedrückt, so nimmt die Vorschubklinke 5 die Brechbacke 1 mit und schließt die Brechbacken um eine Zahnteilung. Bei Loslassen des Hebels 3 öffnet eine Feder 10 den Hebelweg und bringt die Vorschubklinke 5 in den nächstfolgenden Zahn. Die Rastenklinke, die auf dem Handhebel 2 drehbar um den Punkt c befestigt ist, hält die Spannung zwischen Nuß und den Brechbacken.

Sie bleibt im Eingriff mit dem Zahnkranz.
Der Drückvorgang kann wiederholt werden.
Zum Öffnen des Nußknackers und zur Entnahme des Nußkerns wird die Rastenklinke und die mitgenommene Vorschubklinke gegen den Zahnkranz frei. Dieser wird durch die Feder 9 zur Freigabe in Richtung y bewegt.

## Patentansprüche

1. Nußknacker mit einem ersten und zweiten Handhebel (2,3), die in einer ersten Achse (b) beweglich verbunden sind, und mit zwei Brechbacken, wobei die erste Brechbacke mit dem ersten Handhebel (2) einstückig ausgebildet ist, die zweite Brechbacke (1) an der ersten Brechbacke an einer zweiten Achse (a) drehbar befestigt ist und auf das freie Ende der zweiten Brechbacke (1) der zweite Handhebel (3) einwirkt, wobei das freie Ende der zweiten Brechbacke (1) mit einer gebogenen Zahnleiste versehen ist, wobei im Handhebel (3) zwischen der ersten Achse (b) und der Zahnleiste eine Vorschubklinke (5) beweglich gelagert ist, die mittels einer Feder (7) in die Zahnleiste drückbar ist, und wobei auf die Handhebel (2,3) eine Feder (10) im Öffnungssinne einwirkt, dadurch gekennzeichnet, daß am ersten Handhebel (2) eine Rastenklinke (6) angeordnet ist, die unter der Wirkung einer Feder (8) in die Zahnleiste eingreift und deren nach oben abgewinkeltes Klinkenende so ausgebildet ist, daß es die Vorschubklinke zum Öffnen mitnimmt und somit die Zahnleiste freigibt, und daß die zweite Achse (a) an dem freien Ende der ersten Brechbacke angeordnet ist.

## Claims

1. Nutcracker with a first and second hand levers (2, 3), which are movably connected in a first axis (b), and with two breaking jaws, wherein the first breaking jaw is made in one piece with the first hand lever (2), and the second breaking jaw (1) is fastened pivotably to the first breaking jaw on a second axis (a), and the second hand lever (3) acts on the free end of the second breaking jaw (1), wherein the free end of the second breaking jaw (1) is provided with a bent toothed rack, wherein a pawl (5) is movably mounted in the hand lever (3) between the first axis (b) and the toothed rack, and said pawl (5) can be pressed by a spring (7) into the toothed rack, and wherein a spring (10) acts on the hand levers (2, 3) in the direction of opening, characterized in that a locking catch (6) is arranged on the first hand lever (2), and said locking catch (6) engages with the toothed rack under the action of a spring (8), and its upwardly bent catch end is designed such that it carries with it the pawl for opening, thus releasing the toothed rack, and that the second axis (a) is arranged at the free end of the first breaking jaw.

## Revendications

1. Casse-noix comprenant un premier et un second levier (2, 3), destinés à être tenus dans une main, qui sont reliés mobiles au droit d'un premier axe (b), ainsi que deux mâchoires de fractionnement dont la première est réalisée d'un seul tenant avec le premier levier (2), tandis que la seconde mâchoire (1) est fixée rotative à la première mâchoire au droit d'un deuxième axe (a) et agit sur l'extrémité libre de la seconde mâchoire (1) du second levier (3), dans lequel l'extrémité libre de la seconde mâchoire (1) est pourvue d'une crémaillère courbe, dans lequel un cliquet d'avance (5) est monté mobile dans le levier (3) entre le premier axe (b) et la crémaillère, cliquet (5) qui peut être poussé par un ressort (7) dans la crémaillère, et dans lequel un ressort (10) agit dans le sens de l'ouverture sur les leviers (2, 3), caractérisé en ce qu'un cliquet d'arrêt (6), disposé sur le premier levier (2), pénètre sous l'action d'un ressort (8) dans la crémaillère et possède une extrémité coudée vers le haut et conformée de manière qu'elle entraîne le cliquet d'avance pour l'ouverture et libère ainsi la crémaillère, et en ce que le deuxième axe (a) est disposé sur l'extrémité libre de la première mâchoire.
